(19) **Europäisches Patentamt / European Patent Office / Office européen des brevets**

(11) **EP 3 378 972 B1**

(12) # EUROPEAN PATENT SPECIFICATION

(45) Date of publication and mention
of the grant of the patent:
**10.09.2025 Bulletin 2025/37**

(21) Application number: **18152259.0**

(22) Date of filing: **18.01.2018**

(51) International Patent Classification (IPC):
**C25B 15/08** (2006.01)  **C25B 1/00** (2021.01)
**H01M 8/0668** (2016.01)  **H01M 8/18** (2006.01)
**H01M 8/04089** (2016.01)  **H01M 8/04119** (2016.01)
**H01M 8/0612** (2016.01)  **C25B 1/04** (2021.01)
**C25B 3/25** (2021.01)  **C25B 9/73** (2021.01)
**H01M 8/12** (2016.01)

(52) Cooperative Patent Classification (CPC):
**C25B 1/00; C25B 1/04; C25B 3/25; C25B 9/73;**
**C25B 15/08; H01M 8/04097; H01M 8/04164;**
**H01M 8/0612; H01M 8/0668; H01M 8/184;**
H01M 2008/1293; Y02E 60/36; Y02E 60/50;
Y02P 70/50

(54) **ELECTRIC POWER STORAGE SYSTEM AND ELECTRIC POWER STORAGE AND SUPPLY SYSTEM**

ELEKTRISCHES ENERGIESPEICHERSYSTEM UND ELEKTRISCHES ENERGIESPEICHER- UND -VERSORGUNGSSYSTEM

SYSTÈME DE STOCKAGE D'ÉNERGIE ÉLECTRIQUE ET DE PUISSANCE ÉLECTRIQUE ET SYSTÈME D'ALIMENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.03.2017 JP 2017055003**

(43) Date of publication of application:
**26.09.2018 Bulletin 2018/39**

(73) Proprietor: **Kabushiki Kaisha Toyota Chuo
Kenkyusho
Nagakute-shi, Aichi 480-1192 (JP)**

(72) Inventor: **WAKASUGI, Tomohisa
Nagakute-shi, Aichi 480-1192 (JP)**

(74) Representative: **Kramer Barske Schmidtchen
Patentanwälte PartG mbB
European Patent Attorneys
Landsberger Strasse 300
80687 München (DE)**

(56) References cited:
EP-A1- 2 940 773  WO-A1-2014/107561
WO-A2-2004/086585  CA-A1- 2 951 324
CA-A1- 2 982 275  US-A1- 2004 081 859
US-A1- 2004 191 595  US-A1- 2006 211 777
US-A1- 2012 201 717  US-A1- 2014 272 734
US-A1- 2014 316 016

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 3 378 972 B1

**Description**

FIELD OF THE INVENTION

The present invention relates to an electric power storage system and an electric power storage and supply system, more specifically to an electric power storage system of producing a synthesis gas from $CO_2$ and $H_2O$ with a solid oxide electrolysis cell, and synthesizing a hydrocarbon fuel from the synthesis gas and an electric power storage and supply system capable of synthesizing a hydrocarbon fuel and generating electricity by using the hydrocarbon fuel reversibly.

BACKGROUND OF THE INVENTION

A solid oxide fuel cell (SOFC) is a fuel cell using an oxide ion conductor as an electrolyte. When a fuel gas such as $H_2$, CO, or $CH_4$ is supplied to an anode and $O_2$ is supplied to a cathode in an SOFC, electrode reaction proceeds and electric power can be taken out. $CO_2$ and $H_2O$ produced by the electrode reaction are discharged outside the SOFC.
In contrast, a solid oxide electrolysis cell (SOEC) has the same structure as an SOFC but causes a reaction opposite to an SOFC. That is, by supplying $CO_2$ and $H_2O$ to an SOEC and applying electric current between electrodes, CO and $H_2$ can be produced.
By using an SOEC, a synthesis gas (CO + $H_2$) can be produced from $CO_2$ and $H_2O$. Further, by using an obtained synthesis gas, a hydrocarbon such as methane can be produced. That is, by using an SOEC, electric energy can be stored as chemical energy. Consequently, various electric power storage systems using an SOEC have heretofore been proposed.
For example, Patent Literature 1 discloses a method of:

(a) converting direct sunlight into thermal energy,
(b) heating a synthesis gas producing cell to 500°C to 1,000°C by using the thermal energy and producing a synthesis gas from $CO_2$ and $H_2O$, and
(c) feeding the flow of the synthesis gas obtained in the synthesis gas producing cell to a catalytic reactor and producing a hydrocarbon fuel.

When an SOEC is used, a synthesis gas (CO, $H_2$) can be produced by using $CO_2$ and $H_2O$ as a fuel. At this time, when a fuel utilization rate $U_f$ increases, the amount of a gas (CO, $H_2$) produced by electrolytic reaction increases and concentration polarization is caused. As a result, Nernst loss increases, hence a required electrolysis voltage increases, and an electrolysis efficiency lowers.
On the other hand, when a fuel utilization rate $U_f$ decreases, an electrolysis voltage can be inhibited from increasing but the concentration of $CO_2$ and $H_2O$ in a synthesis gas increases. As a result, the reaction rate of hydrocarbon synthesis reaction lowers and the concentration of a hydrocarbon fuel contained in a gas after the synthesis reaction also lowers. Further, unreacted $CO_2$ and $H_2O$ are discharged out of a system while holding thermal energy and hence a thermal efficiency is low. In order to improve a thermal efficiency, it is necessary to use captured $CO_2$ and $H_2O$ effectively and reduce thermal energy required for heating a supply gas.

[Citation List]

[Patent Literature]

[Patent Literature 1] Japanese Unexamined Patent Application Publication (Translation of PCT Application) No. 2016-511296
US 2014/272734 A1 discloses an electrochemical device for syngas and liquid fuels production.
CA 2 951 324 A1 relates to an electrolysis method and electrolysis system comprising recirculating flushing media.
EP 2 940 773 A1 discloses an ejector for a solid oxide electrolysis cell stack system.
CA 2 982 275 A1 relates to a production process and a production system for producing methane/gaseous and/or liquid hydrocarbons.
WO 2004/086585 A2 discloses a SORFC system and method with an exothermic net electrolysis reaction.
US 2004/081859 A1 relates to a solid oxide regenerative fuel cell.
US 2004/191598 A1 discloses a SORFC system and method with an exothermic net electrolysis reaction.

## SUMMARY OF THE INVENTION

A problem to be solved by the present invention is to provide an electric power storage system capable of synthesizing a hydrocarbon at a high electrolysis efficiency, and inhibiting the reaction rate of hydrocarbon synthesis reaction and the concentration of a hydrocarbon contained in a gas after the synthesis reaction from lowering.

Further, another problem to be solved by the present invention is to provide an electric power storage and supply system capable of synthesizing a hydrocarbon highly efficiently and generating electricity highly efficiently by using the synthesized hydrocarbon reversibly.

In order to solve the above problems, an electric power storage system according to the present invention includes the features of claim 1.

An electric power storage and supply system according to the present invention includes the features of claim 2.

When electrolysis is carried out with an SOEC, by recovering an unreacted raw material ($CO_2$, $H_2O$) from an offgas ($A_{out}$) of the SOEC and adding the unreacted raw material to a raw material gas ($A_{in}$), a yield in hydrocarbon synthesis reaction and a hydrocarbon concentration can be inhibited from lowering. At the same time, by lowering a fuel utilization rate of the SOEC, an electrolysis voltage can be inhibited from increasing and an electrolysis efficiency also improves.

The same applies to the case of operating an R-SOC in an SOFC mode and, by recovering an unreacted fuel contained in an offgas ($A'_{out}$), adding it to a fuel gas ($A'_{in}$), and simultaneously generating electricity at a low fuel utilization rate, a substantial fuel utilization rate can improve without lowering an electric power generation efficiency.

## BRIEF DESCRIPTION OF THE DRAWINGS

Fig. 1 is a schematic view of an electric power storage system according to a first embodiment of the present invention;
Fig. 2 is a schematic view of an electric power storage system according to a second embodiment of the present invention;
Fig. 3 is a schematic view of an electric power storage system according to a third embodiment of the present invention;
Fig. 4 is a schematic view of an electric power storage system according to a fourth embodiment of the present invention;
Fig. 5 is a schematic view of an electric power storage and supply system according to the present invention;
Fig. 6 is a schematic view showing the flow of a gas in an SOFC mode in a system shown in Fig. 5;
Fig. 7 is a schematic view showing the flow of a gas in an SOEC mode in a system shown in Fig. 5;
Fig. 8A is a graph showing a relationship between a fuel utilization rate and an SOEC efficiency or an energy;
Fig. 8B is a graph showing a relationship between a fuel utilization rate and a required electrolysis voltage;
Fig. 9A is a graph showing a relationship between a $CO_2$ separation rate and a synthesis gas flow rate;
Fig. 9B is a graph showing a relationship between a $CO_2$ separation rate and a produced gas concentration;
Fig. 10A is a graph showing a relationship between an $H_2O/CO_2$ ratio and an SOEC efficiency or an energy;
Fig. 10B is a graph showing a relationship between an $H_2O/CO_2$ ratio and a synthesis gas flow rate after $CO_2$ separation;
Fig. 11A is a graph showing a relationship between an $H_2O/CO_2$ ratio and a calorific value or an efficiency;
Fig. 11B is a graph showing a relationship between an $H_2O/CO_2$ ratio and a produced gas dry concentration;
Fig. 12A is a graph showing a relationship between a synthesis temperature of $CH_4$ and a calorific value or an efficiency;
Fig. 12B is a graph showing a relationship between a synthesis temperature of $CH_4$ and a produced gas dry concentration;
Fig. 13A is a graph showing a relationship between an $H_2O/CO_2$ ratio and a calorific value or an efficiency;
Fig. 13B is a graph showing a relationship between an $H_2O/CO_2$ ratio and a produced gas dry concentration;
Fig. 14A is a graph showing electric power generation efficiencies and cell voltages in an SOFC mode (750°C, 0.4 A/cm$^2$); and
Fig. 14B is a graph showing fuel production efficiencies and $CH_4$ concentrations in an SOEC mode (750°C, 0.8 A/cm$^2$).

## DETAILED DESCRIPTION OF THE PREFERRED EMBODIMENTS

An embodiment according to the present invention is hereunder explained in detail.

[1. Electric power storage system (1)]

[1.1. Configuration]

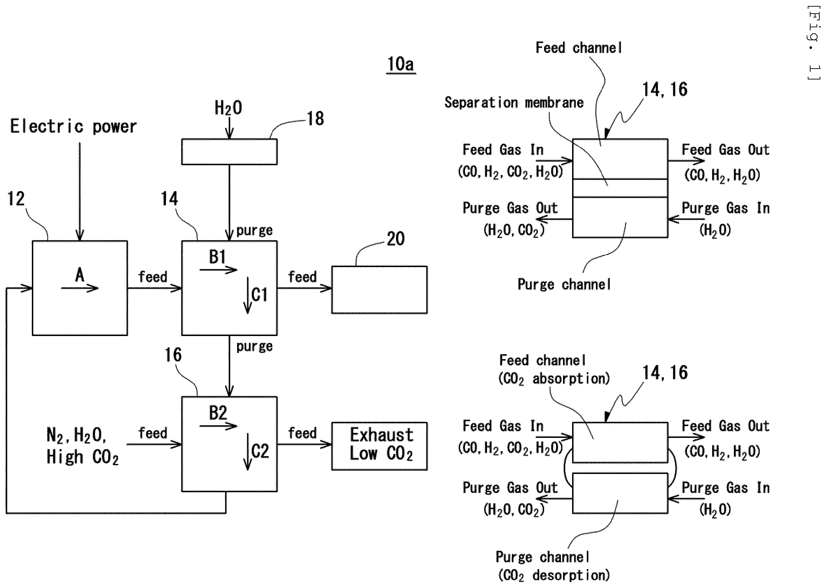

Fig. 1 shows a schematic view of an electric power storage system according to the first embodiment of the present invention. In Fig. 1, an electric power storage system 10a includes a solid oxide electrolysis cell (SOEC) 12, a first $CO_2$ separator ($CO_2$ circulation unit) 14, a second $CO_2$ separator 16, an evaporator 18, a fuel production unit 20, and a control unit (not shown in the figure).

Here, in the following explanations, for convenience sake, a gas flowing in a cathode channel of the SOEC 12 is abbreviated as "A". Likewise, a gas flowing in a feed channel of the first $CO_2$ separator 14 is abbreviated as "$B_1$" and a gas flowing in a purge channel is abbreviated as "$C_1$". Further, a gas flowing in a feed channel of the second $CO_2$ separator 16 is abbreviated as "$B_2$" and a gas flowing in a purge channel is abbreviated as "$C_2$". Furthermore, when an inlet gas and an outlet gas are to be distinguished from each other, suffixes "in" and "out" are added respectively like "$A_{in}$" and "$A_{out}$".

[1.1.1. SOEC]

The SOEC 12 produces a synthesis gas from a raw material gas ($A_{in}$) containing $CO_2$ and $H_2O$ supplied to a cathode channel, and discharges an offgas ($A_{out}$) containing the synthesis gas. When $A_{in}$ is supplied to the cathode channel while electric power is supplied between electrodes of the SOEC 12, reaction represented by the following expression (1) occurs at a cathode.

$$CO_2 + H_2O + 4e\text{-} \rightarrow CO + H_2 + 2O^{2\text{-}} \qquad (1)$$

In reality, however, since not all of the raw material contained in $A_{in}$ is consumed in the reaction, not only CO and $H_2$ but also unreacted $CO_2$ and $H_2O$ are contained in $A_{out}$. When a fuel utilization rate $U_f$ is set low in particular, relatively large amount of $CO_2$ and $H_2O$ remain.

[1.1.2. First $CO_2$ separator]

The first $CO_2$ separator 14 separates $CO_2$ from $A_{out}$, discharges an offgas ($B_{1out}$) formed by removing all or some of $CO_2$, and simultaneously returns a separation gas ($C_{1out}$) containing $CO_2$ separated from $A_{out}$ to the cathode channel. That is, the first $CO_2$ separator 14 has the functions of:

  (a) supplying a synthesis gas of a high concentration to the fuel production unit 20; and
  (b) recovering unreacted $CO_2$ contained in $A_{out}$ and reusing it for electrolysis.

The structure of the first $CO_2$ separator 14 is not particularly limited as long as it exhibits such functions.
The first $CO_2$ separator 14, as described on the upper right corner of Fig. 1, may be configured so as to arrange a feed channel and a purge channel adjacently with a separation membrane interposed in between (hereunder, also referred to as "separation membrane type". When a gas containing $CO_2$ is supplied to the feed channel, only $CO_2$ is discharged to the purge channel through the separation membrane.
Otherwise, the first $CO_2$ separator 14, as described on the lower right corner of Fig. 1, may be configured so as to have two independent channels filled with a $CO_2$ adsorbent capable of absorbing and desorbing $CO_2$ reversibly (hereunder, also referred to as "batch switch type") . When a gas containing $CO_2$ is fed to a feed channel, $CO_2$ is absorbed by a $CO_2$ adsorbent. On the other hand, when a purge gas is fed to a purge channel, $CO_2$ is discharged from the $CO_2$ adsorbent. When the feed channel and the purge channel are switched after a lapse of predetermined time, $CO_2$ can be absorbed and desorbed continuously.
In the example shown in Fig. 1, the first $CO_2$ separator 14 has a first feed channel and a first purge channel. An inlet of the first feed channel is connected to an outlet of the cathode channel of the SOEC 12 and an outlet of the first feed channel is connected to an inlet of the fuel production unit 20. Further, an inlet of the first purge channel of the first $CO_2$ separator 14 is connected to an outlet of the evaporator 18 and an outlet of the first purge channel is connected to an inlet of a second purge channel of the second $CO_2$ separator 16.
An offgas ($A_{out}$) discharged from the cathode channel of the SOEC 12 usually contains CO, $H_2$, $CO_2$, and $H_2O$. When $A_{out}$ is supplied to the first feed channel, $CO_2$ is separated and an offgas ($B_{1out}$) containing CO and $H_2$ as main components is discharged from an outlet of the first feed channel. Further, a separation gas ($C_{1out}$) containing $CO_2$ as the main component is discharged from an outlet of the first purge channel.

[1.1.3. Second $CO_2$ separator]

The second $CO_2$ separator 16 separates $CO_2$ from a gas ($B_{2in}$) supplied from a $CO_2$ source, and supplies a

separation gas ($C_{2out}$) containing $CO_2$ separated from $B_{2in}$ to the cathode channel. That is, the second $CO_2$ separator has the function of $CO_2$ that is the main raw material for producing a synthesis gas.

The structure of the second $CO_2$ separator 16 is not particularly limited as long as it exhibits such functions. For example, the second $CO_2$ separator 16 may be a separation membrane type or a batch switch type.

In the example shown in Fig. 1, the second $CO_2$ separator 16 has a second feed channel and a second purge channel. An inlet of the second feed channel is connected to an outside $CO_2$ source (for example, an automobile or a boiler) and an outlet of the second feed channel is open to the atmosphere. An inlet of the second purge channel of the second $CO_2$ separator 16 is connected to an outlet of the first purge channel of the first $CO_2$ separator 14 and an outlet of the second purge channel is connected to an inlet of the cathode channel of the SOEC 12.

Here, although the evaporator 18, the first $CO_2$ separator 14, and the second $CO_2$ separator 16 are connected in series in this order in Fig. 1, they may be connected in series in the order of the evaporator 18, the second $CO_2$ separator 16, and then the first $CO_2$ separator 14. Otherwise, an outlet of the evaporator 18 is branched into two outlets and the first $CO_2$ separator 14 and the second $CO_2$ separator 16 may be connected in parallel.

[1.1.4. Evaporator]

The evaporator 18 adds $H_2O$ to a separation gas ($C_{1out}$) coming from the first purge channel of the first $CO_2$ separator 14 and a separation gas ($C_{2out}$) coming from the second purge channel of the second $CO_2$ separator 16 and produces a raw material gas ($A_{in}$). That is, the evaporator 18 is a supply source of $H_2O$ that is another main raw material for producing a synthesis gas.

In the example shown in Fig. 1, an outlet of the evaporator 18 is connected to an inlet of the first purge channel of the first $CO_2$ separator 14. The first $CO_2$ separator 14 and the second $CO_2$ separator 16 are connected in series. As a result, when $H_2O$ generated at the evaporator 18 is supplied to the first $CO_2$ separator 14 and the second $CO_2$ separator 16, a mixed gas ($C_{2out}$) of $H_2O$ and $CO_2$ is discharged from the second purge channel. The obtained mixed gas ($C_{2out}$) is supplied as a raw material gas ($A_{in}$) to the cathode channel of the SOEC 12.

[1.1.5. Fuel production unit]

The fuel production unit 20 produces a hydrocarbon (for example, methane) by using an offgas ($B_{1out}$) discharged from the first feed channel of the first $CO_2$ separator 14 as a raw material. The structure of the fuel production unit 20 is not particularly limited and a known unit can be used.

[1.1.6. Control unit]

The electric power storage system 10a has a control unit (not shown in the figure) to control the operation of the system. In the example shown in Fig. 1, the control unit controls operating conditions (for example, temperatures, gas flow rates, and others) of the SOEC 12, the first $CO_2$ separator 14, the second $CO_2$ separator 16, the evaporator 18, and the fuel production unit 20.

[1.1.7. Fuel utilization rate control unit]

The electric power storage system 10a may further have a fuel utilization rate control unit to control a fuel utilization rate $U_f$ of the SOEC 12 to 25% or more to 55% or less during electrolysis. In general, when a fuel utilization rate of the SOEC 12 lowers, an electrolysis voltage lowers and an electrolysis efficiency improves. For the purpose, a fuel utilization rate $U_f$ is desirably 55% or less. When a fuel utilization rate $U_f$ lowers, however, unreacted raw materials and thermal energy discarded outside a system increase and the production efficiency of a hydrocarbon produced in the fuel production unit 20 also lowers.

In contrast, the electric power storage system 10a according to the present embodiment has the first $CO_2$ separator 14 additionally having the function of recovering and reusing unreacted $CO_2$. As a result, even when a fuel utilization rate $U_f$ in the SOEC 12 is set low, unreacted raw materials discarded outside a system can be reduced. That is, a substantial fuel utilization rate can improve without increasing an electrolysis voltage.

When a fuel utilization rate $U_f$ in the SOEC 12 is excessively low, however, the production efficiency of a hydrocarbon deteriorates. Further, a circulation gas flow rate increases and pressure loss in a circulation gas route increases. A fuel utilization rate $U_f$ therefore is desirably 25% or more and more desirably 35% or more.

Examples of methods of setting a fuel utilization rate $U_f$ low include:

> (a) a method of reducing the length of the cathode channel in the SOEC 12 so as to be able to obtain an intended $U_f$ under a specific operating condition; and

(b) a method of controlling the flow rate and concentration of a gas flowing in each of units, an operating temperature in each of the units, and others by using the control unit so as to be able to obtain an intended $U_f$.

[1.2. Effect]

When a mixed gas ($B_{2in}$) containing a large amount of $CO_2$ such as an exhaust gas is fed to the second feed channel of the second $CO_2$ separator 16, $CO_2$ in $B_{2in}$ is discharged to the second purge channel and the remaining gas is discharged as an offgas ($B_{2out}$) containing $CO_2$ of a low concentration from the second feed channel to the atmosphere.

At the same time, when the evaporator 18 is operated and steam is supplied to the second purge channel of the second $CO_2$ separator 16, a mixed gas ($H_2O + CO_2$) necessary for SOEC co-electrolysis is produced. An obtained mixed gas ($C_{2out}$) is supplied as a raw material gas ($A_{in}$) to the cathode channel of the SOEC 12.

When $A_{in}$ is supplied to the cathode channel, CO and $H_2$ are produced by electrolysis reaction and an offgas ($A_{out}$) containing CO, $H_2$, and unreacted $CO_2$ and $H_2O$ is discharged. $CO_2$ is separated from the discharged $A_{out}$ while the discharged $A_{out}$ passes through the first feed channel of the first $CO_2$ separator 14 and the discharged $A_{out}$ comes to be an $H_2 + CO$ mixed gas of a higher concentration. Further, $CO_2$ discharged to the first purge channel is mixed with $H_2O$ supplied from the evaporator 18 and becomes a mixed gas ($H_2O + CO_2$) necessary for SOEC co-electrolysis. An obtained mixed gas ($C_{1out}$) is returned as the raw material gas ($A_{in}$) to the cathode channel of the SOEC 12 and reused for co-electrolysis.

By purging $CO_2$ discharged from the first feed channel of the first $CO_2$ separator 14 by $H_2O$, an $H_2O + CO_2$ mixed gas ($C_{1out}$) of a high concentration can be produced. As a result, resistance caused by concentration polarization reduces and a required electrolysis voltage can be reduced. As a result further, it is possible to produce a synthesis gas and a hydrocarbon efficiently with a small amount of electric power.

Further, in the SOEC 12, a synthesis gas ($CO + H_2$) of a high concentration is produced from an $H_2O + CO_2$ mixed gas and electric power by co-electrolysis. Furthermore, in the fuel production unit 20, a synthesis gas is converted to a hydrocarbon of a high concentration by catalytic reaction.

Further, since a $CO_2$ circulation unit is provided, $CO_2$ that has not been used in the SOEC 12 can be reused. As a result, the SOEC 12 can be set at a condition of a lower fuel utilization rate. Furthermore, by reusing $CO_2$ for electrolysis, thermal energy can be used effectively (thermal energy of an exhaust gas can be used effectively). In addition, it is possible to inhibit concentration polarization caused by the increase of produced gas components ($H_2$, CO) of co-electrolysis reaction from increasing and produce a synthesis gas with a lower electrolysis voltage.

[2. Electric power storage system (2)]

[2.1. Configuration]

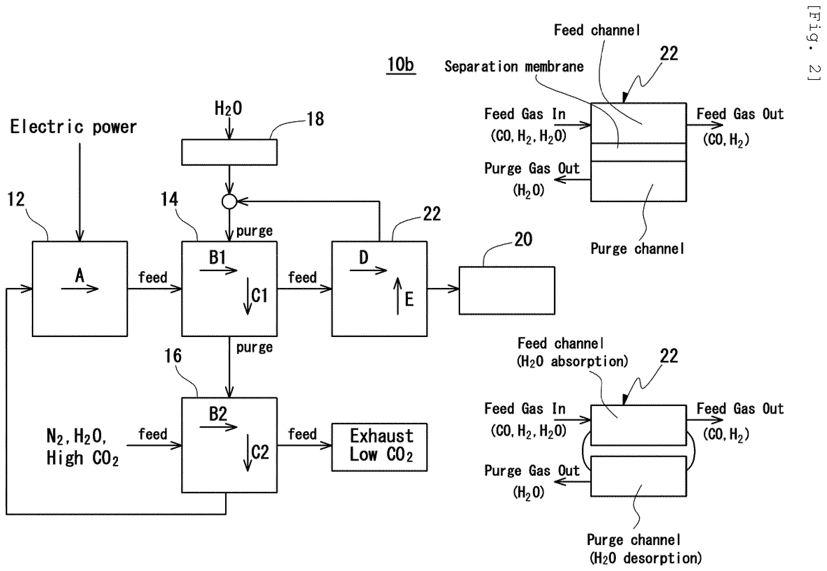

Fig. 2 shows a schematic view of an electric power storage system according to the second embodiment of the present invention. In Fig. 2, the electric power storage system 10b includes a solid oxide electrolysis cell (SOEC) 12, a first $CO_2$ separator ($CO_2$ circulation unit) 14, a second $CO_2$ separator 16, an evaporator 18, a fuel production unit 20, an $H_2O$ separator ($H_2O$ circulation unit) 22, and a control unit (not shown in the figure).

Here, in the following explanations, for convenience sake, a gas flowing in a feed channel of the $H_2O$ separator 22 is abbreviated as "D" and a gas flowing in a purge channel is abbreviated as "E".

In the present embodiment, the $H_2O$ separator 22 is installed between the first $CO_2$ separator 14 and the fuel production unit 20. This point is different from the first embodiment. Here, the $H_2O$ separator 22 may also be installed between the SOEC 12 and the first $CO_2$ separator 14 instead of the location shown in Fig. 2. That is, $H_2O$ may be separated either after $CO_2$ is separated or before $CO_2$ is separated.

The $H_2O$ separator 22 separates $H_2O$ from an offgas ($B_{1out}$) coming from a first feed channel of the first $CO_2$ separator 14 (or an offgas ($A_{out}$) coming from a cathode channel of the SOEC 12), discharges an offgas ($D_{out}$) formed by removing all or some of $H_2O$, and simultaneously returns a separation gas ($E_{out}$) containing separated $H_2O$ to the cathode channel.

The structure of the $H_2O$ separator 22 is not particularly limited as long as it exhibits such functions. For example, the $H_2O$ separator 22 may be of a separation membrane type (refer to upper right corner in Fig. 2) or a batch switch type (refer to lower right corner in Fig. 2).

In the example shown in Fig. 2, the $H_2O$ separator 22 has a third feed channel and a third purge channel. An inlet of the third feed channel is connected to an outlet of a first feed channel of the first $CO_2$ separator 14 and an outlet of the third feed channel is connected to an inlet of the fuel production unit 20. Further, an outlet of the third purge channel of the $H_2O$ separator 22 is connected to an outlet of the evaporator 18.

Other points related to the electric power storage system 10b are similar to the first embodiment and hence explanations are omitted.

[2.2. Effect]

From an offgas ($A_{out}$) discharged from a cathode channel of the SOEC 12, firstly $CO_2$ is removed at the first $CO_2$ separator 14 and successively $H_2O$ is removed at the $H_2O$ separator 22. As a result, an offgas ($D_{out}$) containing CO + $H_2$ of a high concentration is discharged from an outlet of a third feed channel of the $H_2O$ separator 22. Further, since such $D_{out}$ is supplied to the fuel production unit 20, a fuel having a higher fuel component concentration can be produced.

Further, since a third purge channel of the $H_2O$ separator 22 and an outlet of the evaporator 18 are connected, recovered $H_2O$ can be reused. As a result, thermal energy required for newly producing $H_2O$ at the evaporator 18 can be reduced and a fuel can be produced at a higher degree of efficiency.

[3. Electric power storage system (3)]

[3.1. Configuration]

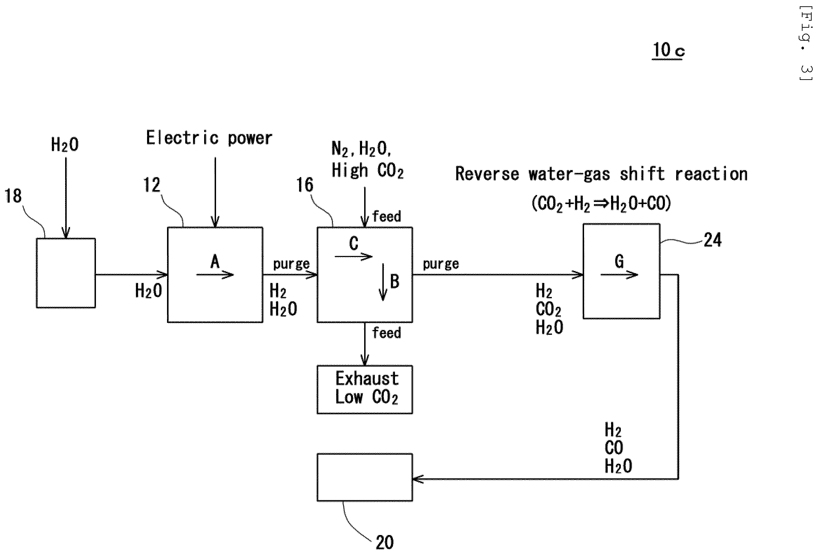

Fig. 3 shows a schematic view of an electric power storage system according to the third embodiment of the present invention. In Fig. 3, the electric power storage system 10c includes a solid oxide electrolysis cell (SOEC) 12, a $CO_2$ separator 16, an evaporator 18, a reverse water-gas shift reactor (RWGSR) 24, a fuel production unit 20, and a control unit (not shown in the figure).

Here, in the following explanations, for convenience sake, a gas flowing in the RWGSR 24 is abbreviated as "G".

[3.1.1. SOEC]

The SOEC 12 produces $H_2$ from a raw material gas ($A_{in}$) containing $H_2O$ supplied to a cathode channel, and discharges an offgas ($A_{out}$) containing $H_2$. When $A_{in}$ is supplied to the cathode channel while electric power is applied between electrodes of the SOEC 12, reaction represented by the following expression (2) occurs at a cathode.

$$H_2O + 2e^- \rightarrow H_2 + O^{2-} \qquad (2)$$

In reality, however, since not all of the raw material contained in $A_{in}$ is consumed in the reaction, not only $H_2$ but also unreacted $H_2O$ is contained in $A_{out}$. When a fuel utilization rate $U_f$ is set low in particular, a relatively large amount of $H_2O$ remains.

[3.1.2. $CO_2$ separator]

The $CO_2$ separator 16 separates $CO_2$ from a gas ($B_{in}$) supplied from a $CO_2$ source, adds separated $CO_2$ to $A_{out}$, and discharges an offgas ($C_{out}$) containing $H_2$ and $CO_2$. That is, the $CO_2$ separator 16 is a supply source of $CO_2$ that is a main raw material for producing a synthesis gas. The structure of the $CO_2$ separator 16 is not particularly limited as long as it exhibits such functions.

In the example shown in Fig. 3, the $CO_2$ separator 16 has a feed channel and a purge channel. An inlet of the feed channel is connected to an outside $CO_2$ source (for example, an automobile or a boiler) and an outlet of the feed channel is open to the atmosphere. An inlet of the purge channel is connected to an outlet of the cathode channel of the SOEC 12 and an outlet of the purge channel is connected to an inlet of the RWGSR 24.

[3.1.3. Evaporator]

The evaporator 18 generates a raw material gas ($A_{in}$) containing $H_2O$ and supplies it to the cathode channel of the SOEC 12. An outlet of the evaporator 18 is connected to an inlet of the cathode channel of the SOEC 12. The structure of the evaporator 18 is not particularly limited as long as it exhibits such functions.

[3.1.4. RWGSR]

The reverse water-gas shift reactor (RWGSR) 24 carries out reverse water-gas shift reaction by using an offgas ($C_{out}$) coming from the $CO_2$ separator 16, and discharges an offgas ($G_{out}$) containing a synthesis gas. The reverse water-gas shift reaction is represented by the following expression (3).

$$CO_2 + H_2 \rightarrow H_2O + CO \qquad (3)$$

In reality, however, since $C_{out}$ containing excessive $H_2$ reacts, $H_2$, CO, and $H_2O$ are contained in $G_{out}$.

In the example shown in Fig. 3, an inlet of the RWGSR 24 is connected to an outlet of a purge channel of the $CO_2$ separator 16 and an outlet of the RWGSR 24 is connected to an inlet of the fuel production unit 20. The structure of the RWGSR 24 is not particularly limited and a known unit can be used.

[3.1.5. Fuel production unit]

The fuel production unit 20 produces a hydrocarbon (for example, methane) by using an offgas ($G_{out}$) discharged from the RWGSR 24 as a raw material. The structure of the fuel production unit 20 is not particularly limited and a known unit can be used.

[3.1.6. Control unit]

The electric power storage system 10c has a control unit (not shown in the figure) to control the operation of the system. In the example shown in Fig. 3, the control unit controls operating conditions (for example, temperatures, gas flow rates, and others) of the SOEC 12, the $CO_2$ separator 16, the evaporator 18, the RWGSR 24, and the fuel production unit 20.

[3.1.7. Fuel utilization rate control unit]

The electric power storage system 10c may further have a fuel utilization rate control unit to control a fuel utilization rate $U_f$ of the SOEC 12 to 25% or more to 55% or less during electrolysis. The details of the fuel utilization rate control unit are similar to the first embodiment and hence the explanations are omitted.

[3.2. Effect]

The SOEC 12 produces a gas ($A_{out}$) containing $H_2$ by using $H_2O$ generated in the evaporator 18 as a raw material through steam electrolysis. $A_{out}$ is supplied to a purge channel of the $CO_2$ separator 16 and mixed with $CO_2$ supplied from a feed channel. As a result, a mixed gas ($C_{cut}$) containing $H_2$ and $CO_2$ is discharged from the purge channel of the $CO_2$ separator 16.

$C_{out}$ is supplied further to the RWGSR 24 and some of $H_2$ contained in $C_{out}$ is consumed there by reverse water-gas shift reaction. As a result, a synthesis gas (CO + $H_2$) containing $H_2O$ is produced. A produced mixed gas ($G_{out}$) is sent from the RWGSR 24 to the fuel production unit 20 and consumed for synthesizing a hydrocarbon.

[4. Electric power storage system (4)]

[4.1. Configuration]

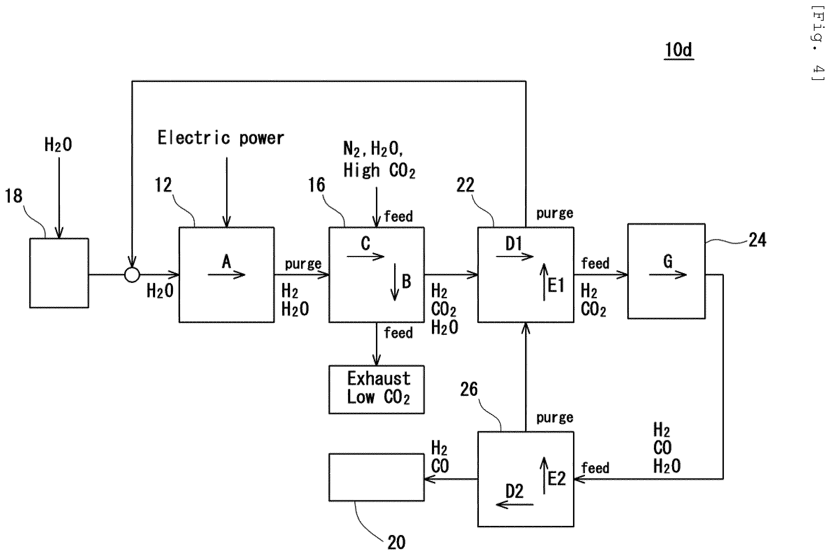

Fig. 4 shows a schematic view of an electric power storage system according to the fourth embodiment of the present invention. In Fig. 4, the electric power storage system 10d includes a solid oxide electrolysis cell (SOEC) 12, a $CO_2$ separator 16, an evaporator 18, a reverse water-gas shift reactor (RWGSR) 24, a first $H_2O$ separator ($H_2O$ circulation unit) 22, a second $H_2O$ separator ($H_2O$ circulation unit) 26, a fuel production unit 20, and a control unit (not shown in the figure) .

In the present embodiment, the first $H_2O$ separator 22 is installed between the $CO_2$ separator 16 and the RWGSR 24. Further, the second $H_2O$ separator 26 is installed between the RWGSR 24 and the fuel production unit 20. This point is different from the third embodiment.

Here, although both the first $H_2O$ separator 22 and the second $H_2O$ separator 26 are installed in the example shown in Fig. 4, it is also possible to install either of them. Further, the first $H_2O$ separator 22 may be installed between the SOEC 12 and the $CO_2$ separator 16.

The first $H_2O$ separator 22 separates $H_2O$ from an offgas ($C_{out}$) coming from the $CO_2$ separator 16 (or an offgas ($A_{out}$) coming from the SOEC 12), discharges an offgas ($D_{1out}$) formed by removing all or some of $H_2O$, and simultaneously returns a separation gas ($E_{1out}$) containing separated $H_2O$ to the cathode channel.

The second $H_2O$ separator 26 separates $H_2O$ from an offgas ($G_{out}$) coming from the RWGSR 24, discharges an offgas ($D_{2out}$) formed by removing all or some of $H_2O$, and simultaneously returns a separation gas ($E_{2out}$) containing separated $H_2O$ to the cathode channel.

In the example shown in Fig. 4, an inlet of a third feed channel of the first $H_2O$ separator 22 is connected to an outlet of a purge channel of the $CO_2$ separator 16 and an outlet of the third feed channel is connected to an inlet of the RWGSR 24. Further, an outlet of a third purge channel of the first $H_2O$ separator 22 is connected to an outlet of the evaporator 18.

An inlet of a fourth feed channel of the second $H_2O$ separator 26 is connected to an outlet of the RWGSR 24 and an outlet of the fourth feed channel is connected to an inlet of the fuel production unit 20. Further, an outlet of a fourth purge channel of the second $H_2O$ separator 26 is connected to an inlet of the third purge channel of the first $H_2O$ separator 22.

Other points related to the electric power storage system 10d are similar to the third embodiment and hence explanations are omitted.

[4.2. Effect]

When $H_2$ is generated by steam electrolysis in the SOEC 12 and further $CO_2$ is supplied by the $CO_2$ separator 16, a mixed gas ($C_{out}$) containing $H_2$, $CO_2$, and $H_2O$ is obtained. Further, when $C_{out}$ is supplied to the first $H_2O$ separator 22, $H_2O$ is removed and an $H_2 + CO_2$ mixed gas of a higher concentration is obtained. As a result, a reaction rate of reverse water-gas shift reaction in the RWGSR 24 can be increased. As a result further, the reactor body of the RWGSR 24 and the quantity of a used catalyst can be reduced.

Further, by connecting the second $H_2O$ separator 26 to an outlet of the RWGSR 24, $H_2O$ can be removed from an offgas ($G_{out}$) of the RWGSR 24. As a result, it is possible to produce a synthesis gas of a higher concentration and a fuel of a higher concentration.

Moreover, both purge channels of the first $H_2O$ separator 22 and the second $H_2O$ separator 26 are connected to an outlet of the evaporator 18. As a result, high temperature steam contained in $E_{1out}$ and $E_{2out}$ can be reused. As a result further, thermal energy required for additionally generating steam in the evaporator 18 is reduced and a fuel can be produced with a higher degree of efficiency.

[5. Electric power storage and supply system]

An electric power storage and supply system according to the present invention includes:

a reversible SOC (R-SOC) capable of switching between an SOEC mode of co-electrolyzing $CO_2$ and $H_2O$ and an SOFC mode of generating electricity by using a hydrocarbon as a fuel;
a hydrocarbon production unit to produce a synthesis gas from $CO_2$ and $H_2O$, further synthesize the hydrocarbon from the synthesis gas, and store the obtained hydrocarbon when the R-SOC is in the SOEC mode;
an electric power generation unit to supply the stored hydrocarbon to the R-SOC and generate electricity when the R-SOC is in the SOFC mode;
a raw material circulation unit to recover unreacted $CO_2$ and $H_2O$ contained in the synthesis gas and return the unreacted $CO_2$ and $H_2O$ to the R-SOC when the R-SOC is in the SOEC mode; and
a fuel circulation unit to recover an unreacted fuel contained in an offgas of the R-SOC and return the unreacted fuel to the R-SOC when the R-SOC is in the SOFC mode.

[5.1. Configuration]

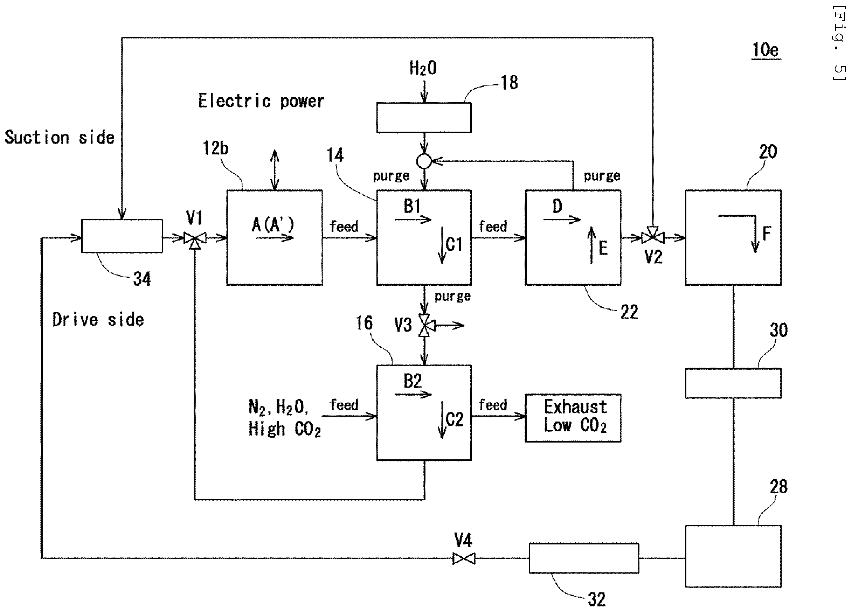

Fig. 5 shows a schematic view of an electric power storage and supply system according to the present invention. In Fig. 5, the electric power storage and supply system 10e includes a reversible SOC (R-SOC) 12b, a first $CO_2$ separator 14, a second $CO_2$ separator 16, an evaporator 18, a fuel production unit 20, an $H_2O$ separator 22, a control unit (not shown in the figure), a storage tank 28, a first pressure regulator 30, a second pressure regulator 32, and an ejector 34. That is, the electric power storage and supply system 10e shown in Fig. 5 is configured by adding the storage tank 28, the first pressure regulator 30, the second pressure regulator 32, and the ejector 34 to the electric power storage system 10b shown in Fig. 2.

[5.1.1. R-SOC]

The reversible SOC (R-SOC) 12b can switch between:

(a) an SOEC mode of producing a synthesis gas from a raw material gas ($A_{in}$) containing $CO_2$ and $H_2O$ supplied to a cathode channel and discharging an offgas ($A_{out}$) containing the synthesis gas; and
(b) an SOFC mode of generating electricity by using a fuel gas ($A'_{in}$) containing a hydrocarbon supplied to an anode channel and discharging an offgas ($A'_{out}$) containing $CO_2$ and $H_2O$.

That is, with regard to the R-SOC 12b, only the manner of usage is different from and the structure is the same as the SOEC 12 shown in Fig. 2.

[5.1.2. First $CO_2$ separator]

The first $CO_2$ separator 14 is used for increasing the purity of a synthesis gas supplied to the fuel production unit 20 and constitutes a part of a "hydrocarbon production unit" during an SOEC mode. Further, it constitutes a part of a "raw material circulation unit" to recover $CO_2$ from $A_{out}$.

On the other hand, the first $CO_2$ separator 14 constitutes a part of a "fuel circulation unit" to recover an unreacted fuel from $A'_{out}$ by separating $CO_2$ from $A'_{out}$ during an SOFC mode. The separated $CO_2$ is discarded directly to the external environment during the SOFC mode. For the purpose, a three-way valve V3 to discharge $CO_2$ to the external environment is installed in a pipe connecting a first purge channel of the first $CO_2$ separator 14 and a second purge channel of the second $CO_2$ separator 16.

Other points related to the first $CO_2$ separator 14 are similar to the second embodiment and hence explanations are omitted.

[5.1.3. Second $CO_2$ separator]

The second $CO_2$ separator 16 is used for supplying $CO_2$ that is a main raw material and constitutes a part of a "hydrocarbon production unit" during an SOEC mode. Further, the second $CO_2$ separator 16 does not have the function of recovering $CO_2$ by itself but is connected in series to a first purge channel of the first $CO_2$ separator 14, and hence constitutes a part of a "raw material circulation unit" too.

On the other hand, the second $CO_2$ separator 16 is not used during an SOFC mode. For the purpose, a three-way valve V1 to temporarily disconnect the second $CO_2$ separator 16 from a system is installed between the second $CO_2$ separator 16 and an anode channel of an R-SOC 12b (during an SOFC mode).

Other points related to the second $CO_2$ separator 16 are similar to the second embodiment and hence explanations are omitted.

[5.1.4. Evaporator]

The evaporator 18 adds $H_2O$ to a separation gas ($C_{1out}$) coming from a first purge channel of the first $CO_2$ separator 14 and a separation gas ($C_{2out}$) coming from a second purge channel of the second $CO_2$ separator 16 and produces a raw material gas ($A_{in}$) during an SOEC mode. The evaporator 18 is not used during an SOFC mode.

Other points related to the evaporator 18 are similar to the second embodiment and hence explanations are omitted.

[5.1.5. $H_2O$ separator]

The $H_2O$ separator 22 is used for increasing the purity of a synthesis gas supplied to the fuel production unit 20 and constitutes a part of a "hydrocarbon production unit" during an SOEC mode. Further, the $H_2O$ separator 22 constitutes a part of a "raw material circulation unit" to recover $H_2O$ from $A_{out}$.

On the other hand, the $H_2O$ separator 22 constitutes a part of a "fuel circulation unit" to recover an unreacted fuel from $A'_{out}$ by separating $H_2O$ from $A'_{out}$ during an SOFC mode. A recovered fuel is returned to the R-SOC 12b. For the purpose, a three-way valve V2 is installed between the $H_2O$ separator 22 and the fuel production unit 20. Further, a remaining outlet of the three-way valve V2 is connected to the suction side of the ejector 34.

Other points related to the $H_2O$ separator 22 are similar to the second embodiment and hence explanations are omitted.

[5.1.6. Fuel production unit]

The fuel production unit 20 constitutes a part of a "hydrocarbon production unit" during an SOEC mode. A produced hydrocarbon is stored in the storage tank 28. Other points related to the fuel production unit 20 are similar to the second embodiment and hence explanations are omitted.

[5.1.7. First pressure regulator, second pressure regulator]

In the example shown in Fig. 5, the first pressure regulator 30 is installed between an outlet of the fuel production unit 20 and an inlet of the storage tank 28. An outlet of the storage tank 28 is connected to a drive side of the ejector 34. Further, an on-off valve V4 and the second pressure regulator 32 are installed between the ejector 34 and the storage tank 28. Furthermore, an outlet of the ejector 34 is connected to a cathode channel of the R-SOC 12b (during an SOEC mode) through the three-way valve V1.

The first pressure regulator 30 and the second pressure regulator 32 increase and decrease the pressure of a hydrocarbon when the hydrocarbon is stored and discharged. When an internal pressure in the R-SOC 12b is high and an internal pressure in the storage tank 28 is low for example, it is desirable to use an expander (pressure reducing device) as the first pressure regulator 30 and use a compressor (booster) as the second pressure regulator 32. As a result, a high pressure gas produced in a system during an SOEC mode can be stored at a low pressure. Further, a hydrocarbon can be used in the state of being pressurized to a predetermined pressure during an SOFC mode.

Inversely, when an internal pressure in the R-SOC 12b is low and an internal pressure in the storage tank 28 is high, it is desirable to use a compressor as the first pressure regulator 30 and use an expander as the second pressure regulator 32.

[5.1.8. Ejector]

The ejector 34 supplies a hydrocarbon stored in the storage tank 28 to an anode of the R-SOC 12b (during an SOFC mode). Further, the ejector 34 is used also for supplying an unreacted fuel recovered from A'$_{out}$ to the R-SOC 12b. An outlet of the storage tank 28 is connected to a drive side of the ejector 34 and an outlet of a feed channel of the $H_2O$ separator 22 is connected to a suction side of the ejector 34. In this state, when a hydrocarbon supplied from the storage tank 28 is ejected from a nozzle on the drive side at high pressure, an offgas ($D_{out}$) in the $H_2O$ separator 22 is sucked by negative pressure around the nozzle.

[5.1.9. Control unit]

The electric power storage and supply system 10e has a control unit (not shown in the figure) to control the operation of the system. In the example shown in Fig. 5, the control unit controls the operating conditions (for example, temperatures, gas flow rates, and others) of the R-SOC 12b, the first $CO_2$ separator 14, the second $CO_2$ separator 16, the evaporator 18, the fuel production unit 20, the first pressure regulator 30, the second pressure regulator 32, and valves V1 to V4.

[5.1.10. Fuel utilization rate control unit]

The electric power storage and supply system 10e may further have a fuel utilization rate control unit to control a fuel utilization rate of the R-SOC to 25% or more to 55% or less during electrolysis reaction and/or electric power generation reaction. The details of the fuel utilization rate control unit are similar to the second embodiment and hence the explanations are omitted.

[5.2. Effect]

[5.2.1. SOFC mode]

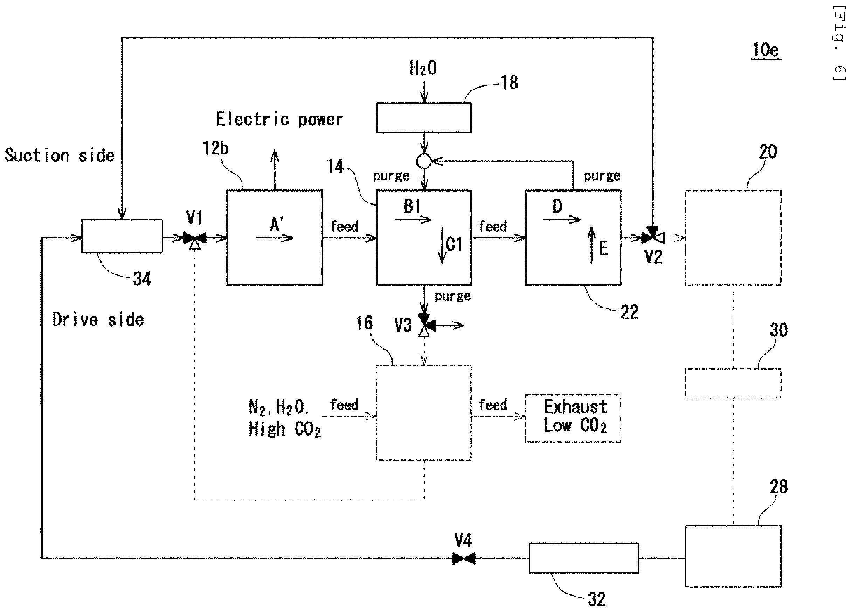

Fig. 6 shows a schematic view showing the flow of a gas in an SOFC mode of the electric power storage and supply system 10e. The ejector 34 and an inlet of an anode channel of the R-SOC 12b (during an SOFC mode) are connected through the three-way valve V1. An outlet of a feed channel of the $H_2O$ separator 22 and a suction side of the ejector 34 are connected through the three-way valve V2. An outlet of a purge channel of the first $CO_2$ separator 14 and an exhaust side are connected through the three-way valve V3. In this state, when the valve V4 is opened and the storage tank 28 and a drive side of the ejector 34 are connected, a hydrocarbon is supplied to an anode of the R-SOC 12b. At the same time, when oxygen is supplied to a cathode side, electric power can be taken out from the R-SOC 12b.

An offgas (A'$_{out}$) of the R-SOC 12b is sent to the first $CO_2$ separator 14 and an $H_2O$ separator 22, and $CO_2$ and $H_2O$ are removed respectively. At this time, $H_2O$ separated at the $H_2O$ separator 22 is sent to a purge channel of the first $CO_2$ separator 14 and used for purging $CO_2$. The purged $CO_2$ is discharged together with $H_2O$ to the external environment through V3. Meanwhile, an unreacted fuel is contained in an offgas ($D_{out}$) formed after $CO_2$ and $H_2O$ are removed. The unreacted fuel is sucked from a suction side of the ejector 34 through the three-way valve V2. As a result, by removing reaction produced gas components ($CO_2$, $H_2O$) in an anode offgas (A'$_{out}$) and controlling the concentrations in a circulation gas, electric power generation loss caused by concentration polarization can be reduced.

[5.2.2. SOEC mode]

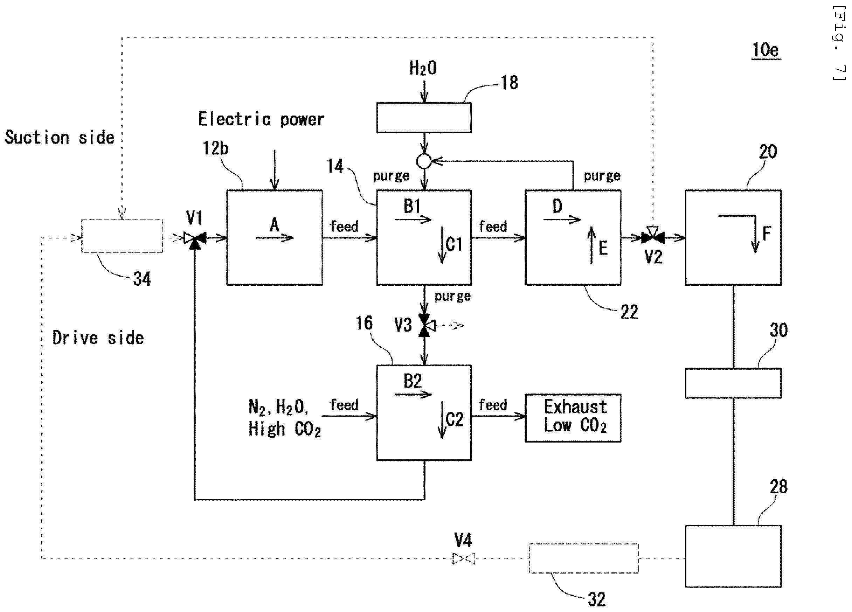

Fig. 7 shows a schematic view showing the flow of a gas in an SOEC mode of the electric power storage and supply system. An outlet of a second purge channel of the second $CO_2$ separator 16 and an inlet of a cathode channel of the R-SOC 12b (during an SOEC mode) are connected through the three-way valve V1. An outlet of a feed channel of the $H_2O$

separator 22 and an inlet of the fuel production unit 20 are connected through the three-way valve V2. An outlet of a first purge channel of the first $CO_2$ separator 14 and an inlet of the second purge channel of the second $CO_2$ separator 16 are connected through the three-way valve V3. Further, the valve V4 is closed.

In this state, when a mixed gas containing $CO_2$ much such as an exhaust gas is fed to a second feed channel of the second $CO_2$ separator 16, $CO_2$ is separated from the exhaust gas and an exhaust gas of a low $CO_2$ concentration is discharged to the atmosphere. At the same time, when steam supplied from the evaporator 18 is fed to the second purge channel of the second $CO_2$ separator 16, a mixed gas ($CO_2 + H_2O$) necessary for SOEC co-electrolysis can be produced.

Further, when $A_{out}$ is fed to a first feed channel of the first $CO_2$ separator 14, $CO_2$ not used in the R-SOC 12b is separated and discharged from the first purge channel. At the same time, when steam is generated at the evaporator 18 and fed to the first purge channel of the first $CO_2$ separator 14, a mixed gas ($CO_2 + H_2O$) necessary for SOEC co-electrolysis can be produced.

By purging $CO_2$ discharged from the first $CO_2$ separator 14 and the second $CO_2$ separator 16 with steam, an $H_2O + CO_2$ mixed gas of a high concentration can be produced. As a result further, it is possible to inhibit a required electrolysis voltage from increasing and produce a hydrocarbon efficiently with a smaller amount of electric power. Furthermore, when a synthesis gas of a high concentration obtained at the R-SOC 12b is supplied to the fuel production unit 20, the synthesis gas is converted into a hydrocarbon of a high concentration by catalytic reaction.

Moreover, by switching between an SOFC mode and an SOEC mode in response to a required electric power or a supplied (surplus) electric power and a volume stored in the storage tank 28, electric power can be stored in the form of a hydrocarbon.

[Examples]

(Example 1)

[1. Test method]

The system efficiencies of the electric power storage systems 10a and 10b shown in Fig. 1 and Fig. 2 are obtained by simulation. Ni-YSZ, $LaSrMnO_3$, and YSZ are selected as the materials of an anode, a cathode, and an electrolyte membrane in an SOFC, respectively. Further, the values described in Table 1 are used as the thickness and the resistivity of each of the materials.

[Table 1]

| | Material | Thickness [mm] | Resistivity [Ω/mm] |
|---|---|---|---|
| Anode | Ni-YSZ | $\delta_{an}$ | $\rho_{an}=0.00298\exp(-1392/T)$ |
| Cathod | $LaSrMnO_3$ | $\delta_{ca}$ | $\rho_{ca}=0.008114\exp(600/T)$ |
| Electrolyte membrane | YSZ | $\delta_{el}$ | $\rho_{el}=0.00294\exp(10350/T)$ |

A generated voltage V and a generated electric power W in an SOFC are obtained through the following expressions (1) and (2), respectively. Further, an electrolysis voltage V and a required electric power W in an SOEC are obtained through the following expressions (3) and (4), respectively.

Generated voltage

$$V = V_{th} - V_{act} - V_{ohm} \qquad (1)$$

Generated electric power

$$W = V \cdot J_e \qquad (2)$$

Electrolysis voltage

$$V = V_{th} + V_{act} + V_{ohm} \qquad (3)$$

Required electric power

$$W = V \cdot J_e \qquad\qquad (4)$$

In the expressions (1) and (3), $V_{th}$ represents the increase of a required electrolysis voltage caused by concentration polarization (Nernst equation). $V_{act}$ represents the increase of a required electrolysis voltage caused by activation polarization. $V_{ohm}$ represents the increase of a required electrolysis voltage caused by resistance polarization (Reference Literature 1). $V_{th}$, $V_{act}$, and $V_{ohm}$ are represented by the following expressions (5) to (7) respectively. Further, $J_e$ in the expressions (2) and (4) represents a current density.

[Reference Literature 1]

Jack Winnick et al., J. Electochem. Soc, Vol. 142(11)1995

[Numerical formula 1]

$$V_{th} = E_0(T) \pm \frac{RT}{4F} \ln\left[\frac{P_{an,H2O} \cdot P_{an,CO2}}{P_{an,H2} \cdot P_{an,CO} \cdot P_{ca,O2}}\right] \qquad \cdots \quad (5)$$

$$- : \text{SOFC mode}, \quad + : \text{SOEC mode}$$

$$\text{Standard electromotive force: } E_0(T) = -\frac{1}{4F}(\Delta G_{H2}(T) + \Delta G_{CO}(T))$$

$$V_{act} = \left[V_a \cdot \frac{\ln(J_c/J_0)}{\ln(1+J_c/J_0)}\right] \cdot \ln(1+J_e/J_0) \qquad \cdots \quad (6)$$

$$V_a = 0.074 \times (T/1273)$$

$$J_0 = 10^{(-7520/T+4.51)}$$

$$J_c = 0.4$$

$$J_e : \text{Current density } [\text{A/cm}^2]$$

$$V_{ohm} = J_e \cdot (\rho_{an} \cdot \delta_{an} + \rho_{ca} \cdot \delta_{ca} + \rho_{el} \cdot \delta_{el}) \qquad \cdots \quad (7)$$

[2. Result]

[2.1. Setting operating condition]

In SOEC electrolysis, as an operating temperature lowers, a required electrolysis voltage tends to increase and an electric power generation efficiency tends to lower. Likewise, at a certain operating temperature, as a current density increases, a required electrolysis voltage tends to increase and an electric power generation efficiency tends to lower. Further, under a certain operating condition, there exists a condition where a calorific loss is nearly equal to heat absorption ($T\Delta S$) (thermoneutral condition). When a system is operated under a thermoneutral condition, the system can be downsized, highly efficient, and more durable. Various studies are hereunder carried out mainly under a thermoneutral condition (operating temperature: 750°C, current density: 0.8 A/cm$^2$).

[2.2. Reduction of fuel utilization rate]

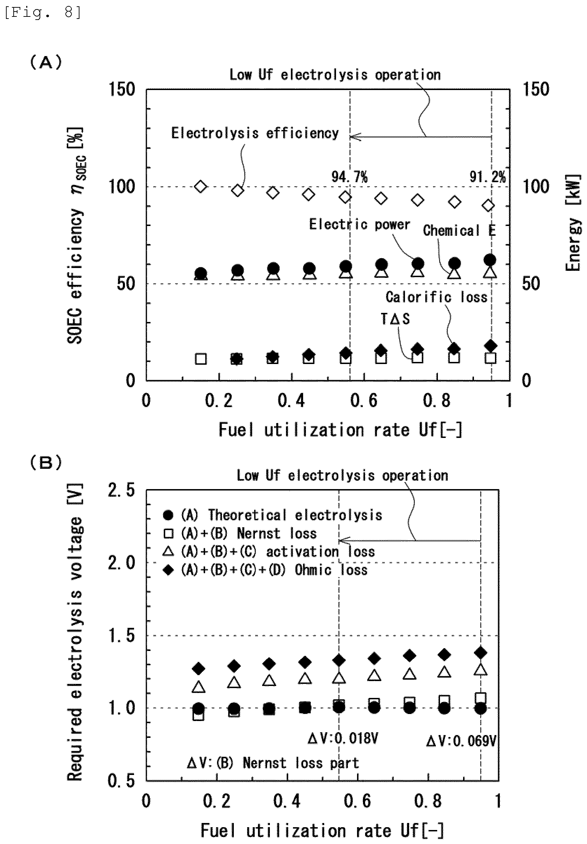

The influence of a fuel utilization rate on an electrolysis voltage and an electrolysis efficiency is studied. Fig. 8A shows a relationship between a fuel utilization rate and an SOEC efficiency or an energy. Further, Fig. 8B shows a relationship between a fuel utilization rate and a required electrolysis voltage. Following findings are obtained from Figs. 8A and 8B.

(a) When a fuel utilization rate $U_f$ is lowered from 0.95 to 0.55, an electrolysis efficiency improves from 91.2% to 94.7% (+3.5%). Further, an electrolysis voltage lowers from 1.4 V to 1.34 V (-0.06 V). Furthermore, voltage rise (Nernst) caused by concentration polarization is reduced from 0.07 V to 0.01 V.

(b) A required electrolysis voltage can be reduced by combining cathode gas circulation and electrolysis at a low fuel utilization rate.

[2.3. $CH_4$ concentration in produced gas]

An offgas ($A_{out}$) discharged from the SOEC 12 contains a synthesis gas ($CO + H_2$) as the main component but also contains unreacted $CO_2$ and $H_2O$. When such $A_{out}$ is supplied to the first $CO_2$ separator 14, $CO_2$ can be separated from $A_{out}$. At this time, when the operating condition of the first $CO_2$ separator 14 is optimized, the proportion of $CO_2$ separated from $A_{out}$ ($CO_2$ separation rate) can be controlled arbitrarily. $CH_4$ concentrations in gases produced when synthesis gases having different $CO_2$ separation rates are supplied to the fuel production unit 20 are studied.

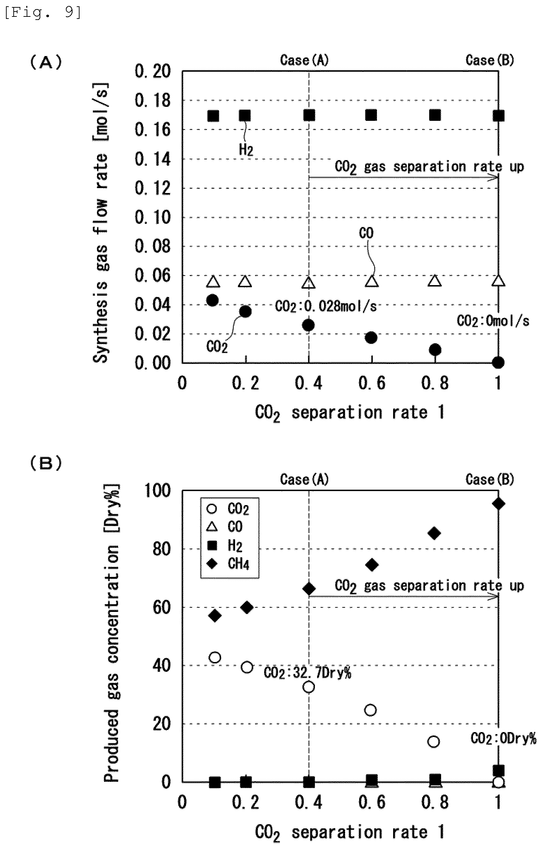

Fig. 9A shows a relationship between a $CO_2$ separation rate and a synthesis gas flow rate. Fig. 9B shows a relationship between a $CO_2$ separation rate and a produced gas concentration. Following findings are obtained from Figs. 9A and 9B.

(a) As a $CO_2$ separation rate increases, the amount of $CO_2$ in a synthesis gas decreases and a $CH_4$ concentration in a produced gas increases. For example, when a $CO_2$ separation rate is 0.4, a $CH_4$ concentration in a produced gas is 66.5 Dry%. In contrast, when a $CO_2$ separation rate is 1.0, a $CH_4$ concentration in a produced gas improves to 95.5 Dry%.

(b) $CO_2$ gas separation and cathode offgas circulation are effective for increasing a $CH_4$ concentration in a produced gas.

(c) Increase of the concentrations of combustible components ($CH_4 + H_2$) is effective for reducing the storage volume of a combustible gas in an R-SOC system.

[2.4. Influence of $H_2O/CO_2$ ratio]

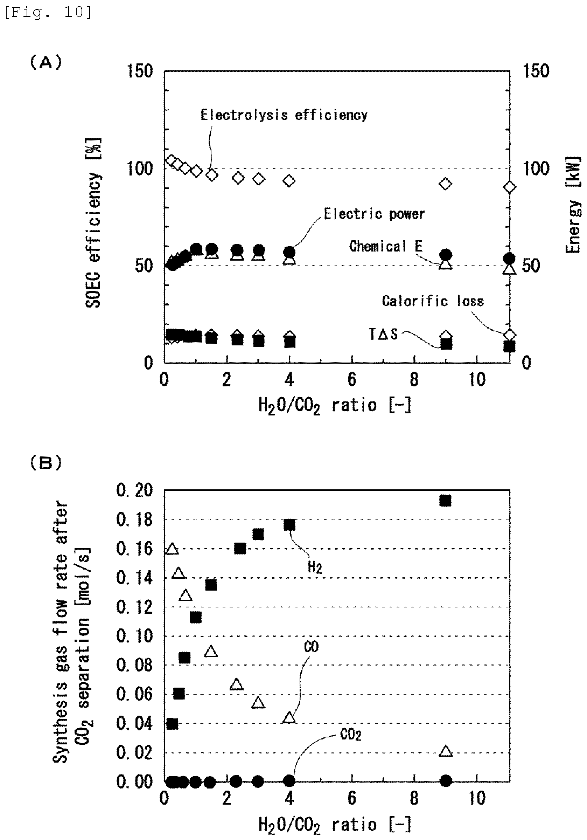

Influence of an $H_2O/CO_2$ ratio on an electrolysis efficiency is studied. Fig. 10A shows a relationship between an $H_2O/CO_2$ ratio and an SOEC efficiency or an energy. Fig. 10B shows a relationship between an $H_2O/CO_2$ ratio and a synthesis gas flow rate after $CO_2$ separation. Following findings are obtained from Figs. 10A and 10B.

(a) As an $H_2O/CO_2$ ratio in a gas ($A_{in}$) supplied to the SOEC 12 increases, a CO flow rate decreases and an $H_2$ flow rate increases. Further, an SOEC efficiency lowers. This is because the calorific values in a synthesis gas in a standard state are in the relationship represented by the expression CO: 283 kJ/mol > $H_2$: 242 kJ/mol.

(b) Electric power required for outputting a produced gas of 50 kW shows the maximum value in the state of $H_2O/CO_2 = 1$.

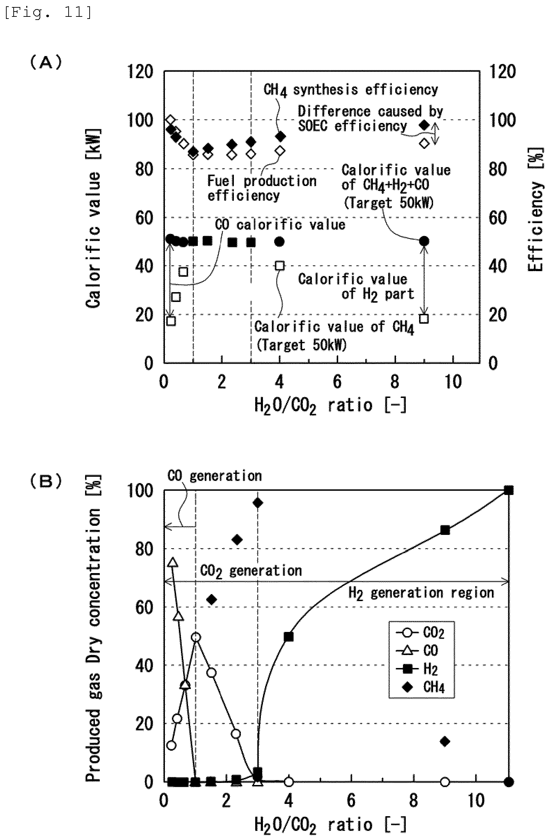

Fig. 11A shows a relationship between an $H_2O/CO_2$ ratio and a calorific value or an efficiency. Fig. 11B shows a relationship between an $H_2O/CO_2$ ratio and a produced gas dry concentration. Following findings are obtained from Figs. 11A and 11B.

(a) There exist two boundaries ($H_2O/CO_2 = 1, 3$) where the amount of produced CO, $CO_2$, or $H_2$ varies in a produced gas in response to an $H_2O/CO_2$ ratio.

(b) In the case of $H_2O/CO_2$ ratio = 1.0, the concentration of $CO_2$ is maximum and a $CH_4$ concentration is 49.7 Dry%. In the case of $H_2O/CO_2$ ratio = 3.0 in contrast, the concentration of $CO_2$ is minimum, a $CH_4$ concentration is maximum (95.5 Dry%), and an $H_2$ concentration is 4.5 Dry%.

(c) When an $H_2O/CO_2$ ratio exceeds 3.0, a $CH_4$ concentration decreases monotonically and an $H_2$ concentration increases monotonically. In order to reduce the storage volume of a combustible gas, storage in the form of $CH_4$ is more desirable than storage in the form of $H_2$. For the purpose, an $H_2O/CO_2$ ratio is desirably 3 to 8 and more desirably 3 to 4.

[2.5. Influence of $CH_4$ synthesis temperature]

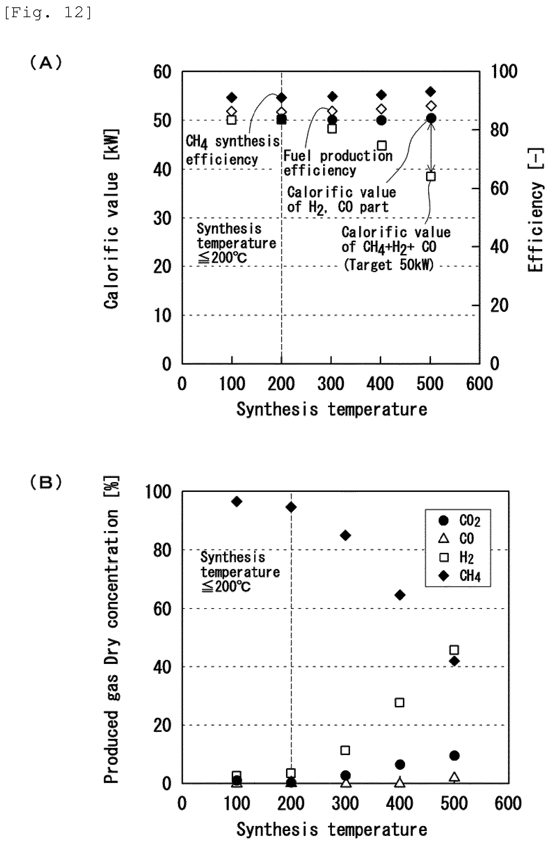

Fig. 12A shows a relationship between a synthesis temperature of $CH_4$ and a calorific value or an efficiency. Fig. 12B shows a relationship between a synthesis temperature of $CH_4$ and a produced gas dry concentration. Following findings are obtained from Figs. 12A and 12B.

(a) As a synthesis temperature rises, an $H_2$ concentration and a CO concentration increase and a $CH_4$ concentration lowers. This is because, as a synthesis temperature rises, methane decomposition reaction or reverse shift reaction tends to proceed.

(b) In order to control a $CH_4$ concentration to 95% or more, a synthesis temperature is desirably 100°C or more to 200°C or less.

(Example 2)

[1. Test method]

The system efficiencies of the electric power storage systems 10c and 10d shown in Fig. 3 and Fig. 4 are obtained by simulation. The simulation method is the same as Example 1.

[2. Result]

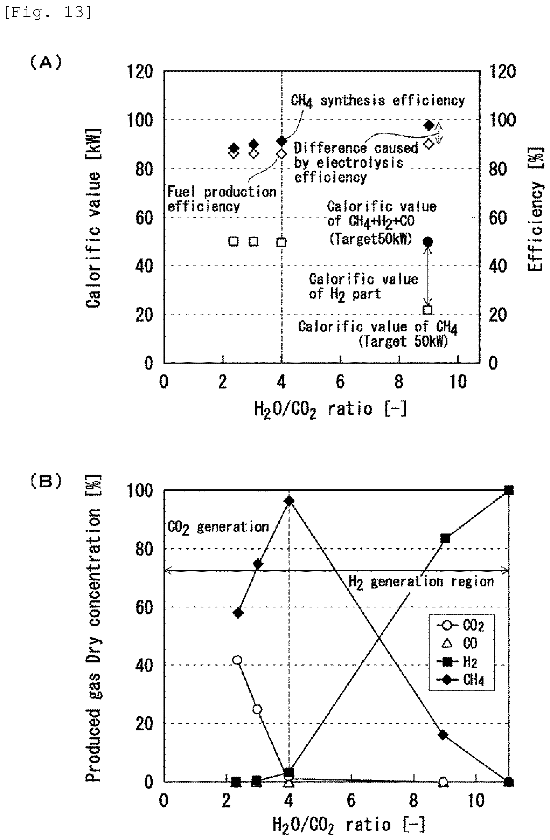

The influence of an $H_2O/CO_2$ ratio is studied in an electric power storage system using the RWGSR 24. Fig. 13A shows a relationship between an $H_2O/CO_2$ ratio and a calorific value or an efficiency. Fig. 13B shows a relationship between an $H_2O/CO_2$ ratio and a produced gas dry concentration. Following findings are obtained from Figs. 13A and 13B.

(a) In the electric power storage system 10c or 10d using the RWGSR 24, there exists a boundary ($H_2O/CO_2$ = 4) where the amount of the produced $CO_2$ and $H_2$ vary in a produced gas in response to an $H_2O/CO_2$ ratio in $A_{in}$.

(b) In the case of $H_2O/CO_2$ ratio = 4.0, a $CO_2$ concentration is minimum, a $CH_4$ concentration is maximum (96.4 Dry%), and an $H_2$ concentration is 3.6 Dry%.

(c) When an $H_2O/CO_2$ ratio exceeds 4, a $CH_4$ concentration decreases monotonically and an $H_2$ concentration increases monotonically. In order to reduce the storage volume of a combustible gas, storage in the form of $CH_4$ is more desirable than storage in the form of $H_2$. For the purpose, an $H_2O/CO_2$ ratio is desirably 4 to 8 and more desirably 4 to 6.

(Example 3)

[1. Test method]

The system efficiency of the electric power storage and supply system 10e shown in Fig. 5 is obtained by simulation. The simulation method is the same as Example 1.

[2. Result]

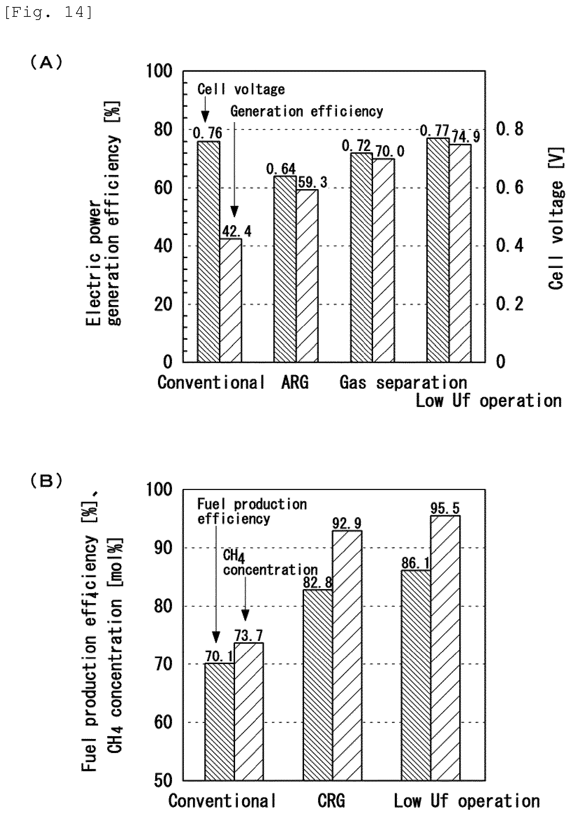

Fig. 14A shows electric power generation efficiencies and cell voltages in an SOFC mode (750°C, 0.4 A/cm$^2$). Fig. 14B shows fuel production efficiencies and $CH_4$ concentrations in an SOEC mode (750°C, 0.8 A/cm$^2$). Further, Table 2 shows detailed operating conditions of "Conventional", "AGR (Anode offGas Recirculation)", "Gas separation", and "Low $U_f$ operation" in Fig. 14A. Furthermore, Table 3 shows detailed operating conditions of "Conventional", "CGR (Cathode offGas Recirculation)" and "Low $U_f$ operation" in Fig. 14B.

[Table 2]

| | Conventional | AGR | Gas separation | Low Uf operation |
|---|---|---|---|---|
| Circulation rate | 0 | 90% | 100% | |
| $CO_2$ separation rate | 0 | | 100% | |
| Circulation S/C ratio | 2 | 2.3 | 2 | |
| Fuel utilization rate | 0.75 | | 0.95 | 0.55 |

[Table 3]

| | Conventional | CGR | Low Uf operation |
|---|---|---|---|
| $H_2O$, $CO_2$ separation rate | 0 | 100% | |

(continued)

| | Conventional | CGR | Low Uf operation |
|---|---|---|---|
| Fuel utilization rate | 0.75 | 0.95 | 0.55 |

Following findings are obtained from Figs. 14A and 14B.

(a) In the case of operating in an SOFC mode, when both gas circulation and $CO_2$ separation are not applied and a fuel utilization rate $U_f$ is relatively high (conventional), a cell voltage is high and an electric power generation efficiency is low. In contrast, when the circulation rate of anode offgas recirculation (AGR) increases or a $CO_2$ separation rate increases, an electric power generation efficiency improves while a cell voltage is kept low. Under the conditions of a circulation rate of 100%, a $CO_2$ separation rate of 100%, and a fuel utilization efficiency of 0.55 in particular, a cell voltage of 0.77 V and an electric power generation efficiency of 74.9% are attained.

(b) In the case of operating in an SOEC mode, when $H_2O$ and $CO_2$ are not separated and a fuel utilization rate $U_f$ is relatively high (conventional), a fuel production efficiency (= SOEC efficiency $\times$ $CH_4$ synthesis efficiency) is low and a $CH_4$ concentration is also low. In contrast, when cathode offgas recirculation (CGR) is applied, a fuel production efficiency improves and a $CH_4$ concentration increases. Further, when a system is operated at a low fuel utilization rate in addition to the application of cathode offgas recirculation, a $CH_4$ concentration increases to 95.5% and a fuel production efficiency reaches 86.1%.

Although embodiments according to the present invention have heretofore been explained in detail, the present invention is not limited to the embodiments at all and can be modified variously in the range not departing from the tenor of the present invention.

An electric power storage system and an electric power storage and supply system according to the present invention can be used for a system of storing and using surplus electric power in renewable energy (sun light, wind power, and others), a dispersion type electric power source, and the like.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric power storage system comprising:

a solid oxide electrolysis cell (SOEC) to produce a synthesis gas from a raw material gas ($A_{in}$) containing $CO_2$ and $H_2O$ supplied to a cathode channel, and discharge an offgas ($A_{out}$) containing the synthesis gas;
a first $CO_2$ separator to separate $CO_2$ from the $A_{out}$, discharge an offgas ($B_{1out}$) formed by removing all or some of $CO_2$, and simultaneously return a separation gas ($C_{1out}$) containing $CO_2$ separated from the $A_{out}$ to the cathode channel;
a second $CO_2$ separator to separate $CO_2$ from a gas ($B_{2in}$) supplied from a $CO_2$ source and supply a separation gas ($C_{2out}$) containing $CO_2$ separated from the $B_{2in}$ to the cathode channel;
an evaporator to add $H_2O$ to the $C_{1out}$ and the $C_{2out}$ and produce the $A_{in}$;
an $H_2O$ separator to separate $H_2O$ from the $A_{out}$ or the $B_{1out}$, discharge an offgas ($D_{out}$) formed by removing all or some of $H_2O$, and simultaneously return a separation gas ($E_{out}$) containing separated $H_2O$ to the cathode channel;
a fuel production unit to synthesize a hydrocarbon by using the $B_{1out}$ or the $D_{out}$; and
a fuel utilization rate control unit to control a fuel utilization rate of the SOEC to 25% or more to 55% or less during electrolysis.

2. An electric power storage and supply system comprising:

a reversible SOC (R-SOC) capable of switching between an SOEC mode of co-electrolyzing $CO_2$ and $H_2O$ and an SOFC mode of generating electricity by using a hydrocarbon as a fuel;

a hydrocarbon production unit to produce a synthesis gas from $CO_2$ and $H_2O$, further synthesize the hydrocarbon from the synthesis gas, and store the obtained hydrocarbon when the R-SOC is in the SOEC mode;

an electric power generation unit to supply the stored hydrocarbon to the R-SOC and generate electricity when the R-SOC is in the SOFC mode;

a raw material circulation unit to recover unreacted $CO_2$ and $H_2O$ contained in the synthesis gas and return the unreacted $CO_2$ and $H_2O$ to the R-SOC when the R-SOC is in the SOEC mode;

a fuel circulation unit to recover an unreacted fuel contained in an offgas of the R-SOC and return the unreacted fuel to the R-SOC when the R-SOC is in the SOFC mode; and

a fuel utilization rate control unit to control a fuel utilization rate of the R-SOC to 25% or more to 55% or less during electrolytic reaction and/or electric power generation reaction,

wherein the hydrocarbon production unit includes:

a first $CO_2$ separator to separate $CO_2$ from an offgas ($A_{out}$) discharged from a cathode channel of the R-SOC, discharge an offgas ($B_{1out}$) formed by removing all or some of $CO_2$, and simultaneously return a separation gas ($C_{1out}$) containing $CO_2$ separated from the $A_{out}$ to the cathode channel;

a second $CO_2$ separator to separate $CO_2$ from a gas ($B_{2in}$) supplied from a $CO_2$ source and supply a separation gas ($C_{2out}$) containing $CO_2$ separated from the $B_{2in}$ to the cathode channel;

an evaporator to add $H_2O$ to the $C_{1out}$ and the $C_{2out}$ and produce the $A_{in}$;

an $H_2O$ separator to separate $H_2O$ from the $A_{out}$ or the $B_{1out}$, discharge an offgas ($D_{out}$) formed by removing all or some of $H_2O$, and simultaneously return a separation gas ($E_{out}$) containing separated $H_2O$ to the cathode channel; and

a fuel production unit to synthesize a hydrocarbon by using the $B_{1out}$ or the $D_{out}$.

## Patentansprüche

1. System zum Speichern von elektrischer Leistung, mit:

einer Festoxidelektrolysezelle (SOEC) zum Produzieren eines Synthesegases aus einem Rohmaterialgas ($A_{in}$), das $CO_2$ enthält, und $H_2O$, das einem Kathodenkanal zugeführt wird, und Abgeben eines Abgases ($A_{out}$), das das Synthesegas enthält;

einem ersten $CO_2$-Separator zum Separieren von $CO_2$ aus dem $A_{out}$, Abgeben eines Abgases ($B_{1out}$), das durch Entfernen zumindest eines Teils von $CO_2$ ausgebildet wird, und gleichzeitig Rückführen eines Separationsgases ($C_{1out}$), das aus dem $A_{out}$ separiertes $CO_2$ enthält, zu dem Kathodenkanal;

einem zweiten $CO_2$-Separator zum Separieren von $CO_2$ aus einem Gas ($B_{2in}$), das von einer $CO_2$-Quelle zugeführt wird, und Zuführen eines Separationsgases ($C_{2out}$), das aus dem $B_{2in}$ separiertes $CO_2$ enthält, zu dem Kathodenkanal;

einem Verdampfer zum Hinzufügen von $H_2O$ zum dem $C_{1out}$ und dem $C_{2out}$ und Produzieren des $A_{in}$;

einem $H_2O$-Separator zum Separieren von $H_2O$ aus dem $A_{out}$ oder dem $B_{1out}$, Abgeben eines Abgases ($D_{out}$), das durch Entfernen zumindest eines Teils von $H_2O$ ausgebildet wird, und gleichzeitig Rückführen eines Separationsgases ($E_{out}$), das separiertes $H_2O$ enthält, zu dem Kathodenkanal;

einer Brennstoffproduktionseinheit zum Synthetisieren eines Kohlenwasserstoffs unter Verwendung des $B_{1out}$ oder des $D_{out}$; und

einer Brennstoffnutzungsratesteuereinheit zum Steuern einer Brennstoffnutzungsrate der SOEC auf 25% oder mehr bis 55% oder weniger während einer Elektrolyse.

2. System zum Speichern und Zuführen von elektrischer Leistung, mit:

einer reversiblen SOC (R-SOC), die dazu in der Lage ist, zwischen einem SOEC-Modus einer Co-Elektrolyse von $CO_2$ und $H_2O$ und einem SOFC-Modus einer Erzeugung von Elektrizität unter Verwendung eines Kohlenwasserstoffs als einen Brennstoff umzuschalten;

einer Kohlenwasserstoffproduktionseinheit zum Produzieren eines Synthesegases aus $CO_2$ und $H_2O$, ferner Synthetisieren des Kohlenwasserstoffs aus dem Synthesegas und Speichern des erhaltenen Kohlenwasserstoffs, wenn die R-SOC in dem SOEC-Modus ist;

einer Einheit zum Erzeugen von elektrischer Leistung zum Zuführen des gespeicherten Kohlenwasserstoffs zu der R-SOC und Erzeugen von Elektrizität, wenn die R-SOC in dem SOFC-Modus ist;

einer Rohmaterialzirkulationseinheit zum Rückgewinnen von nicht reagiertem $CO_2$ und $H_2O$, die in dem Synthesegas enthalten sind, und Rückführen des nicht reagierten $CO_2$ und $H_2O$ zu der R-SOC, wenn die R-SOC in dem SOEC-Modus ist;

einer Brennstoffzirkulationseinheit zum Rückgewinnen eines nicht reagierten Brennstoffs, der in einem Abgas der R-SOC enthalten ist, und Rückführen des nicht reagierten Brennstoffs zu der R-SOC, wenn die R-SOC in dem SOFC-Modus ist; und

einer Brennstoffnutzungsratesteuereinheit zum Steuern einer Brennstoffnutzungsrate der R-SOC auf 25% oder mehr bis 55% oder weniger während einer Elektrolysereaktion und/oder einer Reaktion zum Erzeugen von elektrischer Leistung,

bei dem die Kohlenwasserstoffproduktionseinheit aufweist:

einen ersten $CO_2$-Separator zum Separieren von $CO_2$ aus einem Abgas ($A_{out}$), das von einem Kathodenkanal der R-SOC abgegeben wird, Abgeben eines Abgases ($B_{1out}$), das durch Entfernen zumindest eines Teils von $CO_2$ ausgebildet wird, und gleichzeitig Rückführen eines Separationsgases ($C_{1out}$), das aus dem $A_{out}$ separiertes $CO_2$ enthält, zu dem Kathodenkanal;

einen zweiten $CO_2$-Separator zum Separieren von $CO_2$ aus einem Gas ($B_{2in}$), das von einer $CO_2$-Quelle zugeführt wird, und Zuführen eines Separationsgases ($C_{2out}$), das aus dem $B_{2in}$ separiertes $CO_2$ enthält, zu dem Kathodenkanal;

einen Verdampfer zum Hinzufügen von $H_2O$ zum dem $C_{1out}$ und dem $C_{2out}$ und Produzieren des $A_{in}$;

einen $H_2O$-Separator zum Separieren von $H_2O$ aus dem $A_{out}$ oder dem $B_{1out}$, Abgeben eines Abgases ($D_{out}$), das durch Entfernen zumindest eines Teils von $H_2O$ ausgebildet wird, und gleichzeitig Rückführen eines Separationsgases ($E_{out}$), das separiertes $H_2O$ enthält, zu dem Kathodenkanal; und

eine Brennstoffproduktionseinheit zum Synthetisieren eines Kohlenwasserstoffs unter Verwendung des $B_{1out}$ oder des $D_{ou}t$.

## Revendications

**1.** Système de stockage d'énergie électrique comprenant :

une cellule d'electrolyse à oxyde solide (SOEC) pour produire un gaz de synthèse à partir d'un gaz de matière première ($A_{in}$) contenant du $CO_2$ et du $H_2O$ fourni à un canal cathodique, et évacuer un effluent gazeux ($A_{out}$) contenant le gaz de synthèse ;

un premier séparateur de $CO_2$ pour séparer le $CO_2$ du $A_{out}$, évacuer un gaz résiduel ($B_{1out}$) formé par l'élimination de tout ou partie du $CO_2$, et renvoyer simultanément un gaz de séparation ($C_{1out}$) contenant du $CO_2$ séparé du $A_{out}$ au canal cathodique ;

un second séparateur de $CO_2$ pour séparer le $CO_2$ d'un gaz ($B_{2in}$) fourni par une source de $CO_2$ et fournir un gaz de séparation ($C_{2out}$) contenant du $CO_2$ séparé du $B_{2in}$ au canal cathodique ;

un évaporateur pour ajouter de l'$H_2O$ au $C_{1out}$ et au $C_{2out}$ et produire de l'$A_{in}$ ;

un séparateur de $H_2O$ pour séparer le $H_2O$ du $A_{out}$ ou du $B_{1out}$, évacuer un gaz résiduel ($D_{out}$) formé par l'élimination de tout ou partie du $H_2O$, et renvoyer simultanément un gaz de séparation ($E_{out}$) contenant du $H_2O$ séparé au canal cathodique ;

une unité de production de carburant pour synthétiser un hydrocarbure en utilisant le $B_{1out}$ ou le $D_{out}$ ; et

une unité de contrôle de taux d'utilisation de combustible pour contrôler le taux d'utilisation de combustible du SOEC entre 25 % ou plus et 55 % ou moins pendant l'électrolyse.

**2.** Système de stockage et d'alimentation en énergie électrique comprenant :

un SOC réversible (R-SOC) capable de passer d'un mode SOEC de coélectrolyse du $CO_2$ et du $H_2O$ à un mode SOFC de production d'électricité en utilisant un hydrocarbure comme combustible ;

une unité de production d'hydrocarbures pour produire un gaz de synthèse à partir de $CO_2$ et de $H_2O$, synthétiser l'hydrocarbure à partir du gaz de synthèse et stocker l'hydrocarbure obtenu lorsque le R-SOC est en mode SOEC ;

une unité de production d'électricité pour fournir l'hydrocarbure stocké au R-SOC et produire de l'électricité lorsque le R-SOC est en mode SOFC ;

une unité de circulation de matière première pour récupérer le $CO_2$ et le $H_2O$ n'ayant pas réagi contenus dans le gaz de synthèse et renvoyer le $CO_2$ et le $H_2O$ n'ayant pas réagi au R-SOC lorsque ce dernier est en mode SOEC ;

une unité de circulation de combustible pour récupérer un combustible n'ayant pas réagi contenu dans un effluent gazeux du R-SOC et renvoyer le combustible n'ayant pas réagi au R-SOC lorsque le R-SOC est en mode SOFC ; et

une unité de contrôle de taux d'utilisation de combustible pour contrôler le taux d'utilisation de combustible du R-SOC entre 25 % ou plus et 55 % ou moins pendant la réaction électrolytique et/ou la réaction de production d'énergie électrique,

dans lequel l'unité de production d'hydrocarbures comprend :

un premier séparateur de $CO_2$ pour séparer le $CO_2$ d'un effluent gazeux ($A_{out}$) évacué d'un canal cathodique du R-SOC, évacuer un effluent gazeux ($B_{1out}$) formé par l'élimination de tout ou partie du $CO_2$, et renvoyer simultanément un gaz de séparation ($C_{1out}$) contenant le $CO_2$ séparé de l'$A_{out}$ au canal cathodique ;

un second séparateur de $CO_2$ pour séparer le $CO_2$ d'un gaz ($B_{2in}$) fourni par une source de $CO_2$ et fournir un gaz de séparation ($C_{2out}$) contenant du $CO_2$ séparé du $B_{2in}$ au canal cathodique ;

un évaporateur pour ajouter $H_2O$ au $C_{1out}$ et au $C_{2out}$ et produire l'$A_{in}$ ;

un séparateur de $H_2O$ pour séparer le $H_2O$ du $A_{out}$ ou du $B_{1out}$, évacuer un gaz résiduel ($D_{out}$) formé par l'élimination de tout ou partie du $H_2O$, et renvoyer simultanément un gaz de séparation ($E_{out}$) contenant du $H_2O$ séparé au canal cathodique ; et

une unité de production de carburant pour synthétiser un hydrocarbure en utilisant le $B_{1out}$ ou le $D_{out}$.

[Fig. 1]

[Fig. 2]

EP 3 378 972 B1

[Fig. 3]

10 c

[Fig. 4]

[Fig. 5]

[Fig. 6]

[Fig. 7]

[Fig. 8]

(A)

(B)

[Fig. 9]

(A)

(B)

[Fig. 10]

(A)

(B)

[Fig. 11]

(A)

(B)

[Fig. 12]

(A)

(B)

[Fig. 13]

(A)

(B)

[Fig. 14]

(A)

(B)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016511296 W
- US 2014272734 A1
- CA 2951324 A1
- EP 2940773 A1
- CA 2982275 A1
- WO 2004086585 A2
- US 2004081859 A1
- US 2004191598 A1

**Non-patent literature cited in the description**

- **JACK WINNICK et al.** *J. Electochem. Soc*, 1995, vol. 142 (11)